# EUROPÄISCHE PATENTSCHRIFT

(11) **EP 0 606 862 B1**
(45) Veröffentlichungstag und Bekanntmachung des Hinweises auf die Patenterteilung: **21.08.1996**
(21) Anmeldenummer: 94100216.4
(22) Anmeldetag: 08.01.1994
(51) Int. Cl.: B60H 1/00, G05G 1/28, H01H 19/02

(54) **Anordnung von Stellorganen**
Arrangement of actuators
Disposition d'organes d'actionnement

(30) Priorität: 12.01.1993 DE 9300295 U
(43) Veröffentlichungstag der Anmeldung: 20.07.1994
(73) Patentinhaber: AURORA Konrad G. Schulz GmbH & Co, D-69427 Mudau (DE)
(72) Erfinder: Kern, Alfred, 63936 Schneeberg (DE)
(74) Vertreter: Baronetzky, Klaus, Dipl.-Ing.

(56) Entgegenhaltungen:
- EP-A- 0 129 662
- EP-A- 0 170 155
- DE-A- 2 741 492
- DE-A- 3 332 984
- US-A- 4 930 048

## Beschreibung

Die Erfindung betrifft eine Anordnung von Stellorganen, gemäß dem Oberbegriff von Anspruch 1.

Eine derartige Anordnung von Stellorganen ist aus der DE-PS 33 32 984 bekannt. Diese Lösung hat sich gut bewährt und ermöglicht den Einbau von Stellorgan-Anordnungen, beispielsweise in Horizontal- oder Vertikalausrichtung der Montageplatte, wobei die Anlenkung der für die Betätigung von Heizungs-, Lüftungs- oder Klimaklappen vorgesehenen Bowdenzüge den konstruktiven Anforderungen entsprechend gewählt werden kann.

Es ist wichtig, Bowdenzüge nach Möglichkeit umlenkungsfrei bzw. -arm anzulenken, denn die Störarmut, Leichtgängigkeit und Betriebssicherheit von Bowdenzügen hängt entscheidend von der Verlegung ab. Durch die Vorgabe der festen Winkelstellung zwischen Fixierstück und Anzeigeplatte, die zusammen gegenüber der Montageplatte in definierte Winkelstellungen bringbar sind, kann zwar die Bowdenzuganlenkung entsprechend den Erfordernisssen eingestellt werden.

Häufig wäre es jedoch wichtig, daß die Symbole für die Bedienung der Stellorgane, die von dem Benutzer gut lesbar sein müssen und auch den Betätigungsweg des Stellorgans in der richtigen Weise wiedergeben müssen. So kann es aus ästhetischen Gründen gewünscht sein, bei Stellorganen in einem 90°-Betätigungsweg diesen zwischen einer 45°-Stellung links der oberen Mitte und einer 45°-Stellung rechts der oberen Mitte, oder aber zwischen der oberen Mitte und der rechten waagerechten Stellung zu wählen, bei einem Betätigungsweg von 180° diesen von der linken horizontalen Stellung über die obere Mitte sich zur rechten horizontalen Stellung erstrecken zu lassen bzw. bei einem Betätigungsweg von 270° diesen so festzulegen, daß er sich entweder von der linken horizontalen Stellung in die untere Mitte oder von einer linken unteren 45°-Stellung zu einer rechten unteren 45°-Stellung erstreckt.

Dementsprechend liegt der Erfindung die Aufgabe zu Grunde, eine Anordnung von Stellorganen gemäß dem Oberbegriff von Anspruch 1 zu schaffen, bei welcher die mit der Anzeigeplatte mögliche Anzeige für den Benutzer optimierbar ist, wobei dennoch die Werkzeugkosten möglichst gering gehalten werden sollen.

Diese Aufgabe wird erfindungsgemäß durch Anspruch 1 gelöst. Vorteilhafte Weiterbildungen ergeben sich aus den Unteransprüchen.

Besonders günstig ist es, daß sich erfindungsgemäß mit einer von der Anzeigeplatte unabhängigen Symbolfeldanordnung stets die gleichen Werkzeuge für die insofern modular aufgebaute Anzeigeplatte verwenden lassen. Die Symbolfeldanordnung kann als einfache und preisgünstig herzustellende Folie in entsprechende Ausnehmungen eingelegt sein, wobei die Montage von Fixierstück und Anzeigeplatte aneinander zugleich die Möglichkeit eröffnet, diese in der gewünschten Weise fest einzuklemmen. Hierbei ist es möglich, entweder eine vorgegebene Winkelstellung für die Symbolfeldanordnung beispielsweise in einem 22,5°-Raster vorzusehen, oder aber eine stufenlose Einstellbarkeit zu gewährleisten.

Bevorzugt weist das Fixierstück auch noch Ausnehmungen auf, die eine Beleuchtung der Symbolfeldanordnung von hinten gestatten. Hierbei ist es besonders günstig, wenn eine Mehrzahl von Ausnehmungen entsprechend der Symbolfeldanordnung ringförmig vorgesehen sind und die Symbolfeldanordnung von unten wahlweise an ein Lichtträgerelement anschließbar ist. Dies läßt sich einfach dadurch bewerkstelligen, daß hinter der Symbolfeldanordnung ein ringförmiger Freiraum verbleibt, in den das Lichtträgerelement einsetzbar ist, wenn dies gewünscht wird. Das Lichtträgerelement kann zugleich für eine gleichmäßige Beleuchtungsverteilung sorgen, wobei es auch möglich ist, es mit Lichtleitelementen wie Lichtfasern zu koppeln.

Mit einer einzigen Lichtquelle kann dann die gewünschte Anzahl von Symbolfeldanordnungen und entsprechend die gewünschte Anzahl von Stellorganen beleuchtbar sein, wobei bevorzugt die Montageplatte eine Mehrzahl von Durchbrechungen aufweist, die je für die Aufnahme eines Stellorganes vorgesehen sind. Die tatsächlich verwendete Zahl von Stellorganen läßt sich dann in der gewünschten Weise in Abhängigkeit von dem Anwendungsfall festlegen, und mit geringen Werkzeugkosten durch Verwendung des gleichen Werkzeugs kann die benötigte Anzahl von Stellorganen preisgünstig realisiert werden. Bevorzugt sind die nicht benötigten Durchbrechungen mit einer Abdeckung versehen, die auch als Einsatz für die Durchbrechung vorgesehen sein kann.

Die Symbolfeldanordnung kann auch zusammen mit der Anzeigeplatte und/oder dem Fixierstück als vormontierte Einheit eingebaut werden. Dies empfiehlt sich insbesondere bei einer Bowdenzuganlenkung, bei welcher häufig die optimale Einbaulage bezogen auf das Fahrzeug vorgegeben ist. In diesem Falle ist es für die Montage dann lediglich noch erforderlich, die vormontierte Einheit in die Montageplatte einzusetzen.

Gemäß einer weiteren bevorzugten Ausgestaltung ist es vorgesehen, das Fixierstück einstückig an der Montageplatte vorzusehen, wobei die Drehstellung der Anzeigeplatte gegenüber der Montageplatte bzw. dem Fixierstück dann zugleich die Anordnung des Stellorganes wiedergibt. Dennoch kann aufgrund der separaten Symbolfeldanordnung eine Anzeige in Übereinstimmung mit dem vorgegebenen Betätigungsweg gewährleistet sein. In diesem Zusammenhang ist es günstig, wenn der Betätigungsknopf des Stellorgans ebenfalls in wählbaren Winkellagen auf die Betätigungsachse des Stellorgans aufsteckbar ist.

Erfindungsgemäß besonders günstig ist es ferner, daß die Anordnung auch für einen Schalter- oder Potentiometeranschluß verwendbar ist. Hierzu weist die Anzeigeplatte eine zentrale Durchbrechung auf, die abgesehen von einem Arretierungselement in Form etwa einer Abflachung kreisförmig ist. Hierdurch läßt sich die Lage des Schalters oder Potentiometers bezogen auf die Anzeigeplatte festlegen, während die Stellung der Anzeigeplatte bezogen auf die Montageplatte über die Winkelzuordnungselemente festlegbar ist. Dennoch kann dann die Symbolfeldanordnung den gewünschten Betätigungsweg flexibel und wahlweise anzeigen.

Weitere Vorteile, Merkmale und Einzelheiten ergeben sich aus der nachfolgenden Beschreibung eines Ausführungsbeispiels anhand der Zeichnung.

Es zeigen:
- Fig. 1: eine Draufsicht auf eine erfindungsgemäße Anordnung von Stellorganen in einer Ausführungsform;
- Fig. 2: einen Schnitt durch die Ausführungsform gemäß Fig. 1 in einer leicht modifizierten Ausgestaltung; und
- Fig. 3: eine partielle Rückansicht der modifizierten Ausführungsform gemäß Fig. 2.

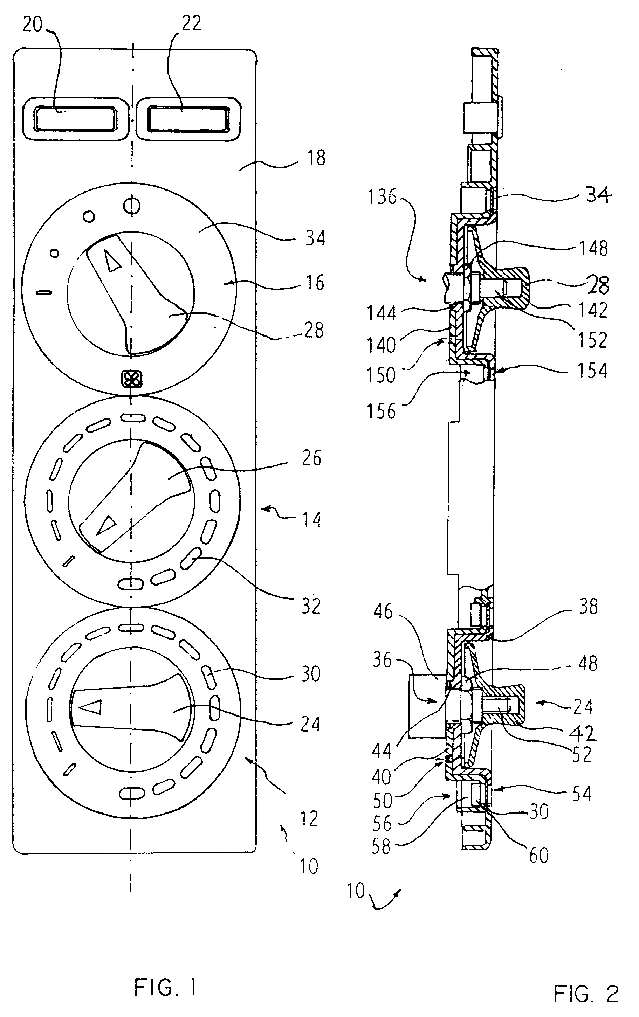

Die in Fig. 1 dargestellte Anordnung 10 von Stellorganen 12, 14, 16 weist eine Montageplatte 18 auf, an welcher die Stellorgane 12, 14 und 16 montiert sind.

Die Montageplatte 18 weist ferner zwei zusätzliche Anzeigefelder 20 und 22 nach der Art von Displays auf, die für die Anzeige beispielsweise der Kraftfahrzeuginnentemperatur bestimmt sind.

In dem dargestellten Ausführungsbeispiel ist die Montageplatte 18 mit drei Stellorganen 12, 14 und 16 voll bestückt. Die Stellorgane 12, 14, 16 weisen je einen Bedienknauf 24, 26 und 28 auf, der von einer Symbolfeldanordnung 30, 32 und 34 umgeben ist. Die Symbolfeldanordnungen 30 und 32 weisen je Markierungen auf, die beispielsweise einer zunehmenden Heizleistung entsprechen. Die Markierungen erstrecken sich über einen Winkel von 315° zwischen der linken unteren 45°-Stellung und der unteren Mitte. Die Bedienknäufe 24 und 26 sind je an Bowdenzüge angelenkt, die entsprechende Heizklappen steuern.

Die Symbolfeldanordnung 34 weist eine Markierung auf, die sich über einen Winkel von 90° von der horizontalen linken Stellung zur oberen Mitte erstreckt. Entsprechend ist der Betätigungsweg des zugehörigen Bedienknaufes 28 90° und der Bedienknauf 28 ist mit einem Stufenschalter für die Ansteuerung eines Gebläses verbunden. Zusätzlich weist die Symbolfeldanordnung 34 an ihrer unteren Mitte ein Symbol für ein Gebläse auf, um die Bedeutung des Stellorgans 16 zu verdeutlichen.

Es versteht sich, daß die dargestellte Ausbildung nur beispielhaft zu verstehen ist. Die Symbolfeldanordnungen 30, 32 und 34 sind je als Einlegefolien ausgebildet, so daß eine andere Bestückung wahlweise vorgenommen werden kann. Beispielsweise können Schalter oder Regler für Umluft/Außenluft oder für die Ansteuerung des Kompressors einer Klimaanlage vorgesehen sein; es ist auch möglich, von hinten gleich das Gehäuse für eine elektronische Regelung an die Stellachse des betreffenden Stellorgans 12, 14, 16 anzuschließen, wobei das Gehäuse zweckmäßig wasserdicht ausgeführt sein sollte.

Fig. 2 zeigt die erfindungsgemäße Anordnung 10 von der Seite, wobei im Bereich der Stellorgane 12 und 16 je eine Schnittansicht dargestellt ist. Gleiche Bezugszeichen weisen hier wie auch in den weiteren Figuren auf gleiche Teile hin. Wie aus Fig. 2 ersichtlich ist, weist die Montageplatte für das Stellorgan 12 eine Durchbrechung 36 auf. Ferner ist für das Stellorgan 12 eine Anzeigeplatte 38 vorgesehen, die mit einem Fixierstück 40 in Eingriff steht. Das Fixierstück 40 und die Anzeigeplatte 38 sind je topfförmig ineinandergreifend ausgebildet, so daß der Bedienknauf 24 versenkt in der Topfmulde der Anzeigeplatte 38 aufnehmbar ist und nur mit einem Griffstück 42 die Ebene der Montageplatte in an sich bekannter und ergonomisch günstiger Weise überragt.

Die Anzeigeplatte 38 weist einen das Fixierstück 40 durchtretenden Stummelansatz 44 auf. Eine nur schematisch dargestellte Bowdenzuganlenkung 46 läßt sich über eine Kontermutter 48 in der gewünschten Stellung arretieren.

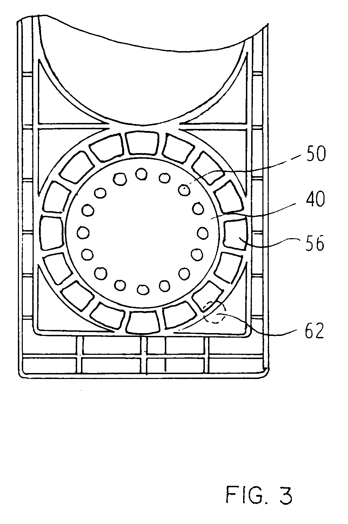

Zur Winkelarretierung weist die Bowdenzuganlenkung 46 eine Abflachung für den Eingriff an der Anzeigeplatte 38 bzw. dem Stummelansatz 44 auf. Hingegen ist die Winkelstellung der Anzeigeplatte 38 gegenüber dem Fixierstück 40 über Winkelzuordnungselemente 50 frei wählbar, die - wie es aus Fig. 3 besser ersichtlich ist - im 22,5°-Raster angeordnet sind und in die beispielsweise entsprechende Zapfen der Anzeigeplatte 36 eingreifen können.

Die Bowdenzuganlenkung 46 läßt sich in einer beliebigen, von der optimalen Zugverlegung bestimmten Winkelausrichtung anbringen. Dennoch ist die Ausrichtung des Betätigungswegs beispielsweise in der aus Fig. 1 ersichtlichen Weise durch das Stellorgan 12 - den ergonomischen Gesichtspunkten Rechnung tragend - möglich, wobei der Bedienknauf 24 natürlich entsprechend - gegebenenfalls über eine der Kraftübertragung dienliche Abflachung - auf eine Stellachse 52 aufgesteckt ist. Zwischen dem Fixierstück 40 und der Anzeigeplatte 38 ist am Umfang des topfförmigen Bereichs dieser beiden Teile die Symbolfeldanordnung 30 eingelegt, wobei die Anzeigeplatte 38 je entsprechende Ausnehmungen 54 für die Symbolfeldanordnung 30 aufweist.

Ferner weist auch das Fixierstück 40 entsprechende Ausnehmungen 56 für die Symbolfeldanordnung auf und hinter den Ausnehmungen 56 erstreckt sich ein ringförmiger Kanal 58, der mit einem Lichtträgerelement 60 versehen ist. Mit dem Lichtträgerelement 60 ist die Symbolfeldanordnung gleichmäßig beleuchtbar. An das Lichtträgerelement 60 sind nicht dargestellte Lichtleitelemente angeschlossen, so daß mit einer einzigen Lichtquelle sämtliche vorhandenen Stellorgane 12, 14 und 16 beleuchtbar sind.

Werden lediglich zwei Stellorgane benötigt, wird die Montageplatte 18 in gleicher Weise verwendet, wobei die Durchbrechung in dem nicht benötigten Bereich des fehlenden Stellorgans mit einer Abdeckung oder einem Einsatz abgedeckt ist.

Im Beispielsfalle ist das Fixierstück 40 mit der Montageplatte 18 einstückig ausgebildet. Es versteht sich, daß auch die aus der gattungsgemäßen Druckschrift bekannte zweistückige Ausgestaltung, bei welcher sich das Fixierstück auf der Rückseite der Montageplatte erstreckt, verwendet werden kann.

Im Bereich des Stellorgans 16 sind die gleichen Teile wie im Bereich des im einzelnen beschriebenen Stellorgans 12 verwendet. Die Teile sind mit entsprechenden Bezugsziffern in Fig. 2 versehen, wobei die betreffende Bezugsziffer gegenüber der im Bereich des Stellorgans 12 um 100 erhöht ist.

Die in Fig. 3 teilweise dargestellte Rückseite der Montageplatte 18 zeigt eine mögliche Ausgestaltung der Winkelzuordnungselemente 50 im Bereich des Fixierstücks 40 sowie der zugehörigen Ausnehmungen 56, die hier als einzelne Lichtfenster ausgebildet sind, und zwar für das Stellorgan 12. Die Lichtzuführung kann beispielsweise in einem Bereich 62 erfolgen.

In diesem Ausführungsbeispiel ist das Stellorgan 14 nicht realisiert. Der zugehörige Bereich der Montageplatte 18 ist hierzu in einer bestimmten Weise modifiziert. Beim Spritzgießen ist in dem Werkzeug ein Einsatz eingesetzt, der materialsparend und kostengünstig die Ausbildung des für das Stellorgan 14 gemäß Fig. 1 benötigte Formstücks verhindert.

Damit lassen sich mit dem gleichen Werkzeug ein Vielzahl unterschiedlicher Ausgestaltungen der erfindungsgemäßen Anordnung 10 bereitstellen.

Sieht man die Winkelzuordnungselemente 50 als Durchbrechungen an der Anzeigeplatte vor, in die kurze Stifte des Fixierstücks 40 eingreifen können, kann eine zusätzliche Rastung des Stellorgans 12 über eine federbelastet in dem Bedienknauf aufgenommene Kugel realisiert werden, die dann in den Winkelzuordnungselementen 50 entsprechend einzurasten vermag.

## Patentansprüche

1. Anordnung von Stellorganen, insbesondere für Vorrichtungen zur Beheizung und Belüftung von Fahrerkabinen oder Fahrgasträumen in Nutzfahrzeugen, wobei mehrere Stellorgane (12) in einer entsprechenden Anzahl von Durchbrechungen (36) einer Montageplatte (18) fixiert sind, indem am Umfang jeder Durchbrechung (36) unter gleichen Winkelabständen Winkelzuordnungselemente angeordnet sind, wobei jeder Durchbrechung (36) auf der Schauseite der Montageplatte (18) eine Anzeigeplatte (38) und ein Fixierstück (40) zueinander drehfest zugeordnet sind und über den Eingriff in die Winkelzuordnungselemente der Einbau der Kombination aus der Anzeigeplatte (38) und dem Fixierstück (40) in einem vorgegebenen, jedoch wählbaren Einbauwinkel gegenüber der Montageplatte (18) möglich ist, dadurch gekennzeichnet, daß zwischen Anzeigeplatte (38), Montageplatte (18) und/oder Fixierstück (40) eine Symbolfeldanordnung (30) drehfest gelagert ist, die in einer bestimmten, jedoch vorwählbaren Winkelstellung bezogen auf die Kombination der Anzeigeplatte (38) und des Fixierstücks (40) lagerbar ist und das Fixierstück (40) Ausnehmungen (56) aufweist, über welche die Symbolfeldanordnung (30) von hinten beleuchtbar ist.

2. Anordnung nach Anspruch 1, dadurch gekennzeichnet, daß auch die Anzeigeplatte (38) und/oder die Montageplatte (18) Ausnehmungen (56) für die Symbolfeldanordnung (30) aufweist.

3. Anordnung nach Anspruch 1 oder 2, dadurch gekennzeichnet, daß die Anzahl der Stellorgane (12, 14, 16) bis zu einer vorgegebenen maximalen Anzahl beliebig wählbar ist, indem die unerwünschte Anzeigeplatte (38) bzw. zugehörige Symbolfeldanordnung (30) mit einer Abdeckung abdeckbar oder durch einen Einsatz in dem für die Herstellung der Anzeigeplatte (38) verwendeten Werkzeug aussparbar ist.

4. Anordnung nach einem der vorhergehenden Ansprüche, dadurch gekennzeichnet, daß die vorwählbare Winkelstellung durch die Anordnung eines Stellorgans (12, 14, 16) vorgebbar ist und das Stellorgan (12, 14, 16) insbesondere eine Bowdenzuganlenkung (46) aufweist, die zusammen mit der Symbolfeldanordnung (30) den Anforderungen entsprechend verdrehbar ist.

5. Anordnung nach einem der vorhergehenden Ansprüche, dadurch gekennzeichnet, daß hinter der Symbolfeldanordnung (30) ein Raum (58) für die Aufnahme eines Lichtträgerelements (60) vorgesehen ist, das sich insbesondere ringförmig unmittelbar angrenzend an die Symbolfeldanordnung (30) erstreckt und von Lichtleitelementen mit Licht beaufschlagbar ist, wobei die Lichtträgerelemente (60) austauschbar und wahlweise einsetzbar sind.

6. Anordnung gemäß Anspruch 1, dadurch gekennzeichnet, daß an die Ausnehmungen (56) in dem Fixierstück (40) Enden einer Lichtleiteranordnung angeschlossen sind, die insbesondere modular ist und eine Lichtverbindung zwischen der Symbolfeldanordnung (30) und einer Lichtquelle herstellt.

7. Anordnung nach einem der vorhergehenden Ansprüche, dadurch gekennzeichnet, daß die Anzeigeplatte (38) durch die Winkelzuordnungselemente (50) in einem festen Winkelraster in formschlüssigen Eingriff mit der Montageplatte (18) bringbar ist und dem fertig montierten Zustand die Symbolfeldanordnung (30) festgehalten wird.

8. Anordnung nach einem der vorhergehenden Ansprüche, dadurch gekennzeichnet, daß Winkelzuordnungselemente (50) auf der Montageplatte (18) angebracht sind, die zugleich als Rastelemente für die Stellorgane (12, 14, 16) verwendbar sind.

9. Anordnung nach einem der vorhergehenden Ansprüche, dadurch gekennzeichnet, daß jede Symbolfeldanordnung (30) gegenüber der Montageplatte (18) hinsichtlich der Winkellage einstellbar ist.

10. Anordnung von Stellorganen gemäß Anspruch 1, dadurch gekennzeichnet, daß das Fixierstück (40) einstückig mit der Montageplatte (18) ausgebildet ist.

11. Anordnung nach einem der vorhergehenden Ansprüche, dadurch gekennzeichnet, daß mindestens ein Stellorgan (16) als elektrischer Schalter ausgebildet ist.

12. Anordnung nach einem der vorhergehenden Ansprüche, dadurch gekennzeichnet, daß das Stellorgan Teil einer Steuer- und/oder Regelelektronik für die Beheizung, Klimatisierung und/oder Belüftung des Fahrzeuginnenraums ist, die drehfest mit dem Fixierstück (40) verbindbar ist.

## Claims

1. An arrangement of control members, in particular for devices for the heating and ventilation of driver's cabs or passenger cabins in commercial vehicles, wherein a plurality of control members (12) are secured in a corresponding number of openings (36) in a mounting plate (18) by the provision at the periphery of each opening (36) of angle-coordination elements at equal angular distances apart, wherein on the display side of the mounting plate (18) each opening (36) is associated with an indicator plate (38) and a fixing member (40) in a manner precluding relative rotation and by way of engagement in the angle-coordination elements it is possible to effect installation of the combination of the indicator plate (38) and the fixing member (40) at a predetermined but selectable installation angle relative to the mounting plate (18), characterised in that a symbol panel arrangement (30) is mounted in a manner precluding relative rotation between the indicator plate (38), the mounting plate (18) and/or the fixing member (40), which symbol panel arrangement can be mounted at a given but preselectable angular position relative to the combination of the indicator plate (38) and the fixing member (40), and the fixing member (40) has recesses (56) via which the symbol panel arrangement (30) can be illuminated from behind.

2. An arrangement according to Claim 1, characterised in that the indicator plate (38) and/or the mounting plate (18) has recesses (56) for the symbol panel arrangement (30).

3. An arrangement according to Claim 1 or 2, characterised in that any number of control members (12, 14, 16) can be chosen up to a preset maximum number by it being possible for the undesired indicator plate (38) or the associated symbol panel arrangement (30) to be covered with a cover or to be left blank by an insert in the implement used to produce the indicator plate (38).

4. An arrangement according to any one of the preceding Claims, characterised in that the preselectable angular position can be preset by the arrangement of a control member (12, 14, 16), and the control member (12, 14, 16) has in particular a Bowden cable articulation (46) which, in accordance with requirements, can be rotated together with the symbol panel arrangement (30).

5. An arrangement according to any one of the preceding Claims, characterised in that behind the symbol panel arrangement (30) there is provided a space (58) for accommodating a light-carrier element (60) which extends in particular annularly immediately adjacent the symbol panel arrangement (30) and can be acted upon with light by light-conducting elements, it being possible for the light-carrier elements (60) to be replaced and, alternatively, inserted.

6. An arrangement according to Claim 1, characterised in that recesses (56) in the fixing member (40) are connected to ends of a light-conducting arrangement which in particular is modular and establishes a light connection between the symbol panel arrangement (30) and a light source.

7. An arrangement according to any one of the preceding Claims, characterised in that the indicator plate (38) can be brought by the angle-coordination elements (50) in a fixed angle grid in form-locking engagement with the mounting plate (18), and the symbol panel arrangement (30) is retained in the ready-installed condition.

8. An arrangement according to any one of the preceding Claims, characterised in that the angle-coordination elements (50) are mounted on the mounting plate (18) and they can be used simultaneously as detent elements for the control members (12, 14, 16).

9. An arrangement according to any one of the preceding Claims, characterised in that each symbol panel arrangement (30) is adjustable in respect of the angular position relative to the mounting plate (18).

10. An arrangement of control members according to Claim 1, characterised in that the fixing member (40) is formed in one piece with the mounting plate (18).

11. An arrangement according to any one of the preceding Claims, characterised in that at least one control member (16) is in the form of an electric switch.

12. An arrangement according to any one of the preceding Claims, characterised in that the control member is part of open-loop control and/or closed-loop electronics for the heating, air-conditioning and/or ventilation of the vehicle interior, which can be connected to the fixing member (40) in a manner precluding independent rotation.

## Revendications

1. Disposition d'organes de manoeuvre, en particulier pour des systèmes de chauffage et d'aération de cabines de chauffeur ou d'habitacles dans des véhicules utilitaires, dans laquelle plusieurs organes de manoeuvre (12) sont fixés dans un nombre correspondant de percements (36) d'une plaque de montage (18) dans laquelle des éléments d'ajustement d'angle sont disposés à la périphérie de chaque percement (36) à des distances angulaires identiques, une plaque d'affichage (38) et une pièce de fixation (40) fixes en rotation l'une par rapport à l'autre étant associées à chaque percement (36) sur le côté visible de la plaque des montage (18), le positionnement de la combinaison qui comprend la plaque d'affichage (38) et la pièce de fixation (40) étant possible grâce à l'encliquetage dans les éléments d'ajustement d'angle dans un angle de montage prédéfini, mais sélectionnable, par rapport à la plaque de montage (18), caractérisée en ce qu'entre la plaque d'affichage (38), la plaque de montage (18) et/ou la pièce de fixation (40) est monté non pivotant un tableau de symboles (30), qui peut être logé dans une position angulaire déterminée, mais présélectionnable, par rapport à la combinaison de la plaque d'affichage (38) et de la pièce de fixation et la pièce de fixation (40) présentant des cavités (56) par lesquelles le tableau de symboles (30) peut être éclairé par l'arrière.

2. Disposition selon la revendication 1, caractérisée en ce que la plaque d'affichage (38) et/ou la plaque de montage (18) présentent des cavités (56) pour le tableau de symboles (30).

3. Disposition selon la revendication 1 ou 2, caractérisée en ce que le nombre des organes de manoeuvre (12, 14, 16) peut être choisi de façon quelconque jusqu'à un nombre maximum prédéfini, la plaque d'affichage (38) non souhaitée ou le tableau de symboles (30) correspondant pouvant être masquée avec un cache ou être évidée au moyen d'une pièce d'insertion placée dans l'outil utilisé pour la fabrication de la plaque d'affichage (38).

4. Disposition selon l'une quelconque des revendications précédentes, caractérisée en ce que la position angulaire préselectionnable peut être prédéfinie par la disposition d'un organe de manoeuvre (12, 14, 16), et l'organe de manoeuvre (12, 14, 16) présente en particulier une articulation pour câble Bowden (46) qui peut pivoter en même temps que le tableau de symboles (30) conformément aux exigences.

5. Disposition selon l'une quelconque des revendications précédentes, caractérisée en ce que derrière le tableau des symboles (30) est prévu un espace (58) pour le logement d'un élément support de lumière (60) qui s'étend en particulier en forme d'anneau directement dans la limite du tableau de symboles (30) et qui peut être alimenté en lumière par des éléments de guidage de lumière, les éléments de guidage de lumière (60) pouvant être remplacés et être insérés à volonté.

6. Disposition selon la revendication 1, caractérisée en ce qu'aux cavités (56) dans la pièce de fixation (40) sont raccordées les extrémités d'un dispositif de guidage de lumière qui est modulaire et qui établit une liaison de lumière entre le tableau de symboles (30) et une source lumineuse.

7. Disposition selon l'une quelconque des revendications précédentes, caractérisée en en ce que la plaque d'affichage (38) peut être maintenue par les éléments d'ajustement d'angle (50) dans un réseau de positions angulaires fixes par encliquetage avec la plaque de montage (18), le tableau de symboles (30) étant maintenu à l'état prémonté.

8. Disposition selon l'une quelconque des revendications précédentes, caractérisé en ce que sur la plaque de montage (18) sont disposés des éléments d'ajustement d'angle (50) qui peuvent être utilisés en même temps comme éléments d'encliquetage pour les organes de manoeuvre (12, 14, 16).

9. Disposition selon l'une quelconque des revendications précédentes, caractérisée en ce que chaque tableau de symboles (30) peut être réglé par rapport à la plaque de montage (18) en ce qui concerne la position angulaire.

10. Disposition d'organes d'actionnement selon la revendication 1, caractérisée en ce que la pièce de fixation (40) est réalisée en une seule pièce avec la plaque de montage (18).

11. Disposition selon l'une quelconque des revendications précédentes, caractérisée en ce qu'au moins un organe de manoeuvre (16) est conformé en interrupteur électrique.

12. Disposition selon l'une quelconque des revendications précédentes, caractérisée en ce que l'organe de manoeuvre forme une partie d'une électronique de commande et/ou d'actionnement pour le chauffage, la climatisation et/ou la ventilation de l'intérieur du véhicule, qui peut être reliée à la pièce de fixation (40) sans possibilité de tourner.
